# EUROPEAN PATENT APPLICATION

(11) **EP 4 772 262 A1**
(43) Date of publication of application: **08.07.2026**
(21) Application number: 25851702.8
(22) Date of filing: 23.06.2025
(51) Int. Cl.: B01D 46/00, B01D 46/42, H01M 4/04, B01F 35/00

(54) **DEVICE FOR AIR VENT AND FILTER COMPRISING SAME**

(30) Priority: 08.08.2024 KR 20240105885
(71) Applicant: LG Energy Solution, Ltd., Seoul 07335 (KR)
(72) Inventor: SEO, Won Sic, Daejeon 34122 (KR); KWON, Jeonghoon, Daejeon 34122 (KR); KIM, Gyeongtae, Daejeon 34122 (KR); CHUNG, Hae Kang, Daejeon 34122 (KR); KIM, Na Hyun, Daejeon 34122 (KR); CHO, Hyung Suk, Daejeon 34122 (KR)
(74) Representative: Plasseraud IP
(86) International application number: PCT/KR2025/008707
(87) International publication number: WO 2026/034794

(57) **Abstract**

The present disclosure provides an air vent device comprising: a body unit having an oblique line-shaped groove formed therein; and an insertion unit having a protrusion coupled to the oblique line-shaped groove, wherein a space is formed between the insertion unit and the body unit by the movement of the protrusion in a state coupled to the oblique line-shaped groove, and wherein the oblique line-shaped groove comprises a first hooking groove at one side end and a second hooking groove at the other side end, and a filter comprising the same.

## Description

### TECHNICAL FIELD

### Cross-Reference to Related Application(s)

This application claims priority to and the benefit of Korean Patent Application no. 10-2024-0105885, filed on August 8, 2024, the disclosure of which is hereby incorporated by reference in its entirety

The present disclosure relates to an air vent device and a filter comprising the same.

### BACKGROUND

Due to the rapid increase in the use of fossil fuels, the demand for the use of alternative energy or clean energy is increasing, and as part thereof, the fields that are being studied most actively are the fields of power generation and power storage using electrochemistry.

At present, a secondary battery is a representative example of an electrochemical device that utilizes such electrochemical energy, and the range of use thereof tends to be gradually expanding.

Recently, with the increase of the technological development and demand for mobile devices such as portable computers, portable phones, and cameras, demand for secondary batteries as an energy source rapidly increases. Among such secondary batteries, many studies have been conducted on a lithium secondary battery that exhibits high charging/discharging characteristics, has a long cycle life, and is eco-friendly, and has been commercialized and widely used.

Such a lithium secondary battery is manufactured by incorporating an electrode assembly including an electrode and a separator together with an electrolyte into a secondary battery case, and the electrode is manufactured by applying an electrode slurry containing an active material onto a current collector, followed by drying and rolling the resulting layer.

At this time, in order to remove impurities generated during the process of mixing, transporting, and supplying the electrode slurry, a filtration process is carried out through a filter, and the air generated in the filter must be removed. However, if the air generated in the filter is not sufficiently removed, air bubbles are contained inside the electrode slurry, which may adversely affect the quality of the electrode surface, and eventually, causes a problem of deterioration in the performance of a secondary battery, which is the final product.

Conventionally, in order to remove air inside the filter, an operator would turn an air vent cap mounted to the upper end of the filter to perform air venting, and the amount of air vented was adjusted according to the degree of turning the cap. Consequently, the air vent cap used heretofore may have a problem that it is not possible to vent a sufficient amount of air because the amount of air vented varies according to the experience value of an operator. When the pressure inside the filter is very high, it may cause a stability problem that the cap pops up.

Therefore, there is a need to develop a technology that can solve the problems of the prior art described above.

### DETAILED DESCRIPTION OF THE INVENTION

### Technical Problem

It is an object of the present disclosure to provide an air vent device that can solve stability issues such as cap popping up while keeping the amount of air vented constant, and a filter configured to couple with the air vent device.

### Technical Solution

According to an aspect of the present disclosure, there is provided an air vent device comprising:
a body unit having an oblique line-shaped groove formed therein; and
an insertion unit having a protrusion coupled to the oblique line-shaped groove,
wherein a space is formed between the insertion unit and the body unit by the movement of the protrusion in a state coupled to the oblique line-shaped groove, and
wherein the oblique line-shaped groove comprises a first hooking groove at one side end and a second hooking groove at the other side end.

According to another aspect of the present disclosure, there is provided a filter configured to couple with the above-mentioned air vent device.

### Advantageous Effects

The present disclosure vents air while moving between the first and second hooking grooves in a state in which the protrusion of the insertion unit is coupled to the oblique line-shaped groove of the body unit, there is an advantage that it is possible to keep the amount of air discharged constant regardless of the experience value of an operator, and the air vent device or the insertion unit does not pot up in a state coupled to the filter.

### BRIEF DESCRIPTION OF THE DRAWINGS

FIG. 1 is a side view of an air vent device according to an embodiment of the present disclosure.
FIG. 2 is a diagram showing an internal cross section and a flow of fluid when the air vent device is in an open state.
FIG. 3 is a diagram showing an internal cross section and a flow of fluid when the air vent device is in a closed state.

### DETAILED DESCRIPTION OF THE EMBODIMENTS

Hereinafter, various embodiments of the present disclosure will be described in detail with reference to the accompanying drawings so that those skilled in the art can easily carry out them. The present disclosure may be modified in various different ways, and is not limited to the embodiments set forth herein.

In order to clearly describe the present disclosure, descriptions of parts unrelated to the description of the present disclosure will be omitted, and the same or similar components throughout the description will be denoted with the same reference numerals.

Since the drawings arbitrarily illustrate the dimension and thickness of each component for the convenience of description, the present disclosure is not necessarily limited to that illustrated. The drawings depict the thickness in an enlarged scale to clearly show different layers and regions. Further, the drawings exaggerate the thickness of a certain layer or region to facilitate the description thereof.

When a layer, film, region, plate or the like is arranged "on" a specific part, the description includes not only a case where the layer, film, region, plate or the like is arranged "directly on" the specific part, but also a case where the layer, film, region, plate or the like is arranged on the specific part via another part. When a part is arranged "directly on" another part, this indicates that no new component is present between the two parts. Further, when a component is arranged "on" a reference part, this indicates that the component is present at the top of or under the reference part, and does not necessarily indicate that the component is arranged only at the top of the reference part, which is opposite to the direction of gravity. Meanwhile, similar to the case where it is described as being located "on" or "above" another part, the case where it is described as being located "below" or "under" another part will also be understood with reference to the above-mentioned contents.

Throughout the descriptions herein, when a certain part "includes" a component, this does not indicate that the certain part excludes other components, but indicates that the part may further include other components, unless otherwise defined.

Throughout the descriptions herein, the terms "in a plan view" indicate viewing an object from above, and the terms "in a cross-sectional view" indicate viewing a vertical cross section of an object from side.

Now, an air vent device according to an embodiment of the present disclosure will be described.

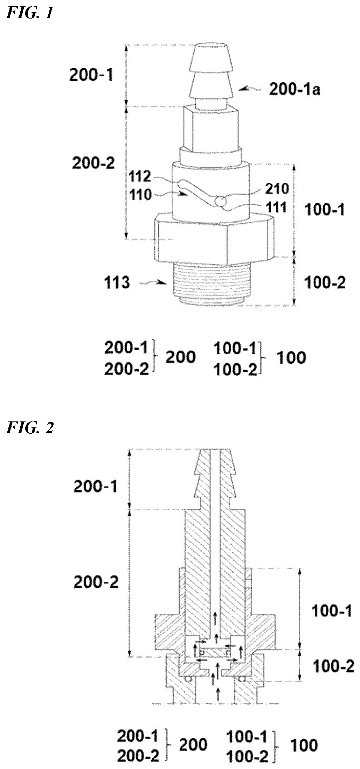

FIG. 1 is a side view of an air vent device 10 according to an embodiment of the present disclosure.

Referring to FIG. 1, an air vent device 10 of the present disclosure comprises a body unit 100 having an oblique line-shaped groove 110 formed therein; and an insertion unit 200 having a protrusion 210 coupled to the oblique line-shaped groove 110, wherein a space is formed between the insertion unit 200 and the body unit 100 by the movement of the protrusion 210 in a state coupled to the oblique line-shaped groove 110, and wherein the oblique line-shaped groove 110 comprises a first hooking groove 111 at one side end and a second hooking groove 112 at the other side end.

The oblique line-shaped groove 110 refers to including an oblique line in a part of the groove.

According to an embodiment of the present disclosure, the protrusion 210 may be a shape protruding from the body of the insertion unit 200, whose cross section is circular, elliptical, or polygonal, e.g., trianglar, or a shape that includes both a straight line and a curve, but is not limited thereto.

In another embodiment of the present disclosure, the cross section of the protrusion 210 may be circular or elliptical.

In yet another embodiment of the present disclosure, the first hooking groove 111 and the second hooking groove 112 may be equal or different in shape, and are not limited as long as they have a shape in which the protrusion 210 can be coupled and fixed.

The body unit 100 is formed with an oblique line-shaped groove 110 that includes a first hooking groove 111 at one side end and a second hooking groove 112 at the other side, and the protrusion 210 of the insertion unit 200 is coupled to the oblique line-shaped groove 110.

According to an embodiment of the present disclosure, the second hooking groove 112 is located at an upper part of the first hooking groove 111 in the longitudinal direction of the body unit 100. Specifically, in a state in which the insertion unit 200 is coupled to the upper part of the body unit 100, the second hooking groove 112 is located closer to the outer side end of the insertion unit 200 (i.e., the other side end of the end inserted into the body unit 100) than the first hooking groove 111.

According to an embodiment of the present disclosure, the body unit 100 comprises a body part 100-1 having the oblique line-shaped groove 110 formed therein; and a connection part 100-2 formed at one end of the body part 100-1, and the outer peripheral surface of the connection part 100-2 comprises a first screw part 113 having a screw line formed therein.

As described above, the second hooking groove 112 is located at an upper part than the first hooking groove 111 in a longitudinal direction of the body unit 100. In other words, when the connection part 100-2 is located lower than the body part 100-1, the second hooking groove 112 is located at an upper part of the first hooking groove 111, specifically, at an upper part in the longitudinal direction of the body unit 100.

In addition, in an embodiment of the present disclosure, when the connection part 100-2 is located lower than the body part 100-1, the second hooking groove 112 is located on a left side of the first hooking groove 111. That is, when the connection part 100-2 of the body unit 100 is arranged to be close to the ground, the second hooking groove 112 may be located on a left side of the first hooking groove 111.

According to another embodiment, when the connection part 100-2 is located lower than the body part 100-1, the second hooking groove 112 is located at the left upper part of the first hooking groove 111.

According to one embodiment of the present disclosure, the insertion unit 200 includes a coupling part 200-2 having a protrusion 210 that is coupled to the oblique line-shaped groove 110; and an apex part 200-1 formed at one end of the connection part 200-2. When air venting is performed through the air vent device 10, a hose is connected to the apex part 200-1, and air; or air and slurry get out through this hose. At this time, the apex part 200-1 includes a base coupling 200-1a so that the hose connected to the apex part 200-1 does not fall off due to air pressure (about 5 bar or more).

The base coupling 200-1a is not limited as long as it has a structure that forms a jaw protruding toward the coupling part 200-2 so that the connected hose does not fall off due to air pressure.

Further, the protrusion 210 moves between the first hooking groove 111 and the second hooking groove 112 according to the rotation of the insertion unit 200, thereby forming a space (open state) between the insertion unit 200 and the body unit 100, or closing the space to change to a closed state.

In an embodiment of the present disclosure, the rotation direction of the insertion unit 200 may be clockwise or counterclockwise.

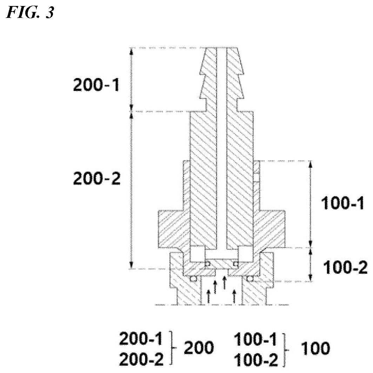

FIG. 2 is a diagram showing an internal cross section and a flow of fluid when the air vent device 10 is in an open state, and FIG. 3 is a diagram showing an internal cross section and a flow of fluid when the air vent device 10 is in a closed state.

Referring to FIG. 2, when the insertion unit 200 rotates clockwise, the protrusion 210 moves from the first hooking groove 111 to the second hooking groove 112 to form a space between the insertion unit 200 and the body unit 100. At this time, the air; or the air and slurry inside the filter are vented to the outside through the space formed between the insertion unit 200 and the body unit 100. Specifically, when the apex part 200-1 of the insertion unit 200 is rotated clockwise, the protrusion 210 coupled to the oblique line-shaped groove 110 moves to the left upper part from the first hooking groove 111 to the second hooking groove 112, and a space is formed (in an open state) between the insertion unit 200 and the body unit 100, so that air or the like can pass through. At this time, the protrusion 210 is caught in the second hooking groove 112, so that a certain amount of air can always be vented regardless of the experience value of an operator, and even if the internal pressure of the device requiring the air vent is high, it is possible to prevent a phenomenon in which the insertion unit 200 pops up.

Specifically, as the apex part 200-1 rotates clockwise, the insertion unit 200 moves upward in a state of being inserted into the body unit 100, and as one end of the insertion unit 200 that was blocking the passage of the fluid (air and slurry) of the body unit moves upward, a space is formed (in an open state) between the insertion unit 200 and the body unit 100, so that the fluid moves into the space between them and is discharged to the outside through the space formed inside the insertion unit 200.

Referring to FIG. 3, when the insertion part 200 rotates counterclockwise in the open state, the protrusion 210 moves from the second hooking groove 112 to the first hooking groove 111, thereby leaving no space between the insertion unit 200 and the body unit 100, and thus reaching the closed state. Specifically, the air vent device 10 in the open state is configured such that a protrusion 210 coupled to an oblique line-shaped groove 110 is located in the second hooking groove 112. When the apex part 200-1 of the insertion part 200 is rotated counterclockwise, the protrusion 210 coupled to the oblique line-shaped groove 110 moves to the right lower part from the second hooking groove 112 to the first hooking groove 111, thereby leaving no space between the insertion unit 200 and the body unit 100 and being in a closed state, so that air or the like cannot pass through.

The body unit 100 and the insertion unit 200 of the air vent device 10 according to an embodiment of the present disclosure may be prepared by a preparation method of a mold or the like using polypropylene (PP), but are not limited thereto, and a person skilled in the art may prepare the air vent device 10 using a material that a chemical resistance is secured against air and/or slurry passing through the air vent device 10 using a method known in the art.

The air vent device 10 according to the above-described embodiments of the present disclosure can be coupled with a filter, and an example of the filter may include a capsule filter, but may be used anywhere where air needs to be removed.

In addition, according to an embodiment of the present disclosure, the filter may include a second screw part that is coupled with the first screw part 113 of the air vent device 10, and the air vent device 10 and the filter can be coupled to each other through the screw coupling of the first screw part 113 and the second screw part (not shown). Thereby, even if the internal pressure of the filter is high, it is possible to prevent a phenomenon in which the air vent device 10 pops up.

In an embodiment of the present disclosure, the filter coupled with the air vent device 10 can be applied anywhere where filtration is required in the preparation and supply process of the electrode slurry. As an example in which a filter coupled with the air vent device 10 can be applied, a main mixer, a transfer tank, a supply tank and the like of the electrode slurry may be mentioned. However, the present disclosure is not limited thereto, and can be applied to various devices requiring an air vent.

Although preferred embodiments of the present disclosure have been shown and described above, the scope of the present disclosure is not limited thereto, and numerous other variations and modifications can be made to the embodiments by those skilled in the art using the basic principles of the invention defined in the appended claims, which also falls within the spirit and scope of the invention.

### [Description of Reference Numerals]

10: Air vent device
100: Body unit
100-1: Body part
100-2: Connection part
110: Oblique line-shaped groove
111: First hooking groove
112: Second hooking groove
113: First screw part
200: Insertion unit
200-1: Apex part
200-1a: Base coupling
200-2: Coupling part
210: Protrusion

## Claims

1. An air vent device comprising:
a body unit having an oblique line-shaped groove formed therein; and
an insertion unit having a protrusion coupled to the oblique line-shaped groove,
wherein a space is formed between the insertion unit and the body unit by the movement of the protrusion in a state coupled to the oblique line-shaped groove, and
wherein the oblique line-shaped groove comprises a first hooking groove at one side end and a second hooking groove at the other side end.

2. The air vent device according to claim 1,
wherein the second hooking groove is located at an upper part than the first hooking groove in a longitudinal direction of the body unit.

3. The air vent device according to claim 1,
wherein when the insertion unit rotates clockwise, the protrusion moves from the first hooking groove to the second hooking groove to form a space between the insertion unit and the body unit, and
when the insertion unit rotates counterclockwise, the protrusion moves from the second hooking groove to the first hooking groove to leave no space between the insertion unit and the body unit.

4. The air vent device according to claim 1,
wherein the body unit comprises a body part having the oblique line-shaped groove formed therein; and a connection part formed at one end of the body part, and
the outer peripheral surface of the connection part comprises a first screw part having a screw line formed therein.

5. The air vent device according to claim 4,
wherein when the connection part is located lower than the body part, the second hooking groove is located at the left upper part of the first hooking groove.

6. The air vent device according to claim 1,
wherein the insertion unit comprises a coupling part having a protrusion coupled to the oblique line-shaped groove; and an apex part formed at one end of the coupling part.

7. The air vent device according to claim 6,
wherein the apex part comprises a base coupling.

8. A filter configured to couple with the air vent device according to any one of claims 1 to 7.

9. The filter according to claim 8,
comprising a second screw part that is coupled with the first screw part of the connection part.
